# EUROPEAN PATENT APPLICATION

(11) **EP 1 419 700 A1**
(43) Date of publication of application: **19.05.2004**
(21) Application number: 02079835.1
(22) Date of filing: 18.11.2002
(51) Int. Cl.: A23D 7/00, A23D 9/00, A23L 1/39, A23L 1/40

(54) **Food products comprising fat and a starch-containing matter and process for their manufacture**

(71) Applicant: UNILEVER N.V., 3013 AL Rotterdam (NL)
(72) Inventor: Flöter, Eckhard Unilever R&D Vlaardingen, 3133 AT Vlaardingen (NL); Lansbergen, Gabriel J. T. Unilever R&D Vlaardingen, 3133 AT Vlaardingen (NL); Romann, Joachim, 74074 Heilbronn (DE); Rupp, Winfried, 74074 Heilbronn (DE)
(74) Representative: Wurfbain, Gilles L.

(57) **Abstract**

Food compositions comprising 15-80%wt of triglycerides of fatty acids, 20-85%wt of a starch-containing matter and which compositions contain less than 30%wt of water, wherein the amount of H3 (triglyceride of 3 saturated fatty acids of 16 or more carbon atoms) and H2U (triglyceride of 2 saturated fatty acids of 16 or more carbon atoms and 1 cis-unsaturated fatty acid) taken together is at least 55%wt based on the total amount of triglycerides, and process for their manufacture.

## Description

### Field of the invention

The present invention relates to food compositions which contain fat, and in particular food compositions comprising triglycerides of fatty acids, wherein the composition is low in triglycerides of trans-unsaturated fatty acids, and which compositions further comprise a starch-containing matter.

### Background of the invention

Food compositions (and in particular savoury food compositions) contain in many cases fat and a starch or starchy-like matter. This is especially the case for particulate and/or pasty compositions like preparations for instant cream-style soups and sauces, which to a large extent consist of fat, starch or a starchy matter, and salt and flavourings. Similarly, preparations which upon dilution/heating with an aqueous liquid yield a roux, mainly contain fat and flour (or other starch source). Such preparations are often regarded as dry preparations. However, such compositions still may contain a considerable amount of water, e.g. as a result of an incomplete dehydration process or as a result from water naturally present in the constituents, such as moisture in flour. The amount of moisture present in the compositions according to the invention is below 30% wt (based on the total composition), preferably less than 20% wt, more preferably less than 10%wt. Such compositions are disclosed e/.g. in EP 112504.

The food compositions as described above are often in the form of particles or in pasty form. Particulate in this context is to be understood as powder, flakes, cubes, pellets etcetera. Examples of such products are roux and base products for creamy sauces, ingredients for soups and sauces, etcetera.

The fats in savoury compositions described above usually comprise a considerable amount triglycerides of fatty acids (hereinafter for short: triglycerides). Fats are usually mixtures of various triglycerides. The type of fat or fat blend used for a given purpose is determined (next to availability and price) by e.g. the properties the fat has and how it performs in a given product, and in the manufacture of such product. The fat should perform well on e.g. taste, melting in the mouth, taste keepability, but also on ability to be processed into a suitable product as well as performance in the packed product, e.g. keepability (in particular fat staining for cubes packaged in cardboard).

The triglycerides (which form part or all of the fat) are usually obtained from vegetable sources and may have been subjected to various treatments, such as fractionation (dry or wet), purification, hardening, interesterification, blending etcetera, to give the fat the desired product properties. Hardening unsaturated fat or triglycerides to saturated or partially unsaturated fat or triglycerides is in particular a tool used to obtain the desired melting behaviour. In this way, oils or soft fats can be turned into fats showing more suitable properties for solid or dry formulations.

The hardening process may lead to formation of a certain amount of so-called trans-unsaturated fatty acids (and/or triglycerides containing such trans-unsaturated fatty acids), in short TFA's. For various reasons it may be desired to reduce or eliminate the amount of trans-unsaturated fatty acids (and triglycerides thereof) in products. For spreads (margerines and the like) a wide range of possible alternative fats and triglycerides are proposed, as is disclosed in e.g. WO 97/16978 and WO 96/39855.

The triglycerides mentioned in such applications frequently contain lauric acid (C12 saturated fatty acid). It has been found that when one wishes to find an alternative for the trans-unsaturated fatty acids (and fats containing them) in savoury applications lauric acid is undesired. Lauric acid and triglycerides containing lauric acid may show a range of desirable properties, in particular melting behaviour, but in a savoury application triglycerides of lauric acid were found to lead to a (soapy) off-flavour, especially after prolonged storage.

Hence, there is a desire for (savoury) food products as described above which contain triglyceride fats which are low in trans-unsaturated fatty acids (e.g. below 5% of the total fats present, preferably less than 2%), but which still should perform well in a (savoury) food composition comprising carbohydrates, in particular concerning processability, fat staining, crystallisation, mouthfeel, and other characteristics as mentioned above. Preferably, such product should also be low in lauric acid or triglycerides thereof (e.g. below 10% of the total fats present, preferably less than 3%, most preferably less than 0.5% wt of the total fats present). As the products which is aimed at will contain a certain proportion of starch-containing matter (including starch itself), it is also required that the fats as used in the products according to the invention are easy to process into finished food products with such starch-containing matter.

Triglyceride fats can be grouped according to the fatty acids of which they consist. Such groups can be identified by a letter, and herein:
H means saturated fatty acid of 16 carbon atoms or longer (C16+, e.g. up to C24)
U means unsaturated fatty acids in cis conformation (any chain length)
E means unsaturated fatty acids in trans conformation (any chain length)
M means saturated fatty acids of 10-14 carbon atoms (C10-C14)
As the present application is about triglycerides of such fatty acids, the fatty acid composition of the triglycerides is given by for example:
H3 (meaning a triglyceride of 3 saturated fatty acids of 16 or more carbon atoms)
H2E (meaning a triglyceride of 2 saturated fatty acids of 16 or more carbon atoms and 1 trans-unsaturated fatty acid)
H2M (meaning a triglyceride of 2 saturated fatty acids of 16 or more carbon atoms and 1 saturated fatty acid of 10-14 carbon atoms)
H2U (meaning a triglyceride of 2 saturated fatty acids of 16 or more carbon atoms and 1 cis-unsaturated fatty acid)
HE2 (meaning a triglyceride of 1 saturated fatty acid of 16 or more carbon atoms and 2 trans-unsaturated fatty acids), and so on for other 3 letter codes.
Fat compositions can thus be characterised in containing certain weight percentages (based on the total amount of triglycerides) of triglycerides of the above codes.

Although it is mentioned for E and U that they may have any length, it is to be understood that this relates to fatty acids of approx. 8-24 carbon atoms, and more usually 16-20 carbon atoms.

### Summary of the invention

It has now been found that the objectives as given above may be met (at least in part) by a (savoury) food composition comprising 15-80% wt (preferably 25-70% wt, most preferably 30-60% wt) of triglycerides of fatty acids, 20-85% wt (preferably 30-75% wt, most preferably 40-70% wt) of a starch-containing matter and which composition contains less than 30% wt (preferably less than 20% wt, more preferably even less than 10% wt) of water, wherein the amount of H3 (triglyceride of 3 saturated fatty acids of 16 or more carbon atoms) and H2U (triglyceride of 2 saturated fatty acids of 16 or more carbon atoms and one cis-unsaturated fatty acid) taken together is at least 55% wt based on the total amount of triglycerides, preferably at least 65% % wt based on the total amount of triglycerides. In other words: H3 + H2U > 55%, preferably > 65% wt, based on total triglycerides.

This means that of the total amount of triglycerides present in the composition according to this invention at least 55% wt (preferably at least 65% wt) are triglycerides of fully saturated C16 and longer chains (e.g. C16, C18, C20, C22 and C24) and/or triglycerides containing one cis-unsaturated fatty acid of any chain length and two saturated fatty acids of 16 or more carbon atoms. In connection to this, it is believed that the dry and/or particulate and/or pasty savoury food compositions as currently on the market comparable to the compositions according to the invention contain about 30-50% of such H3 + H2U triglycerides as part of their fats.

The starch-containing matter may comprise flour, natural starch, a native starch, chemically or physically modified starch. As starch-containing matter can be applied in particular flours, more in particular flours from wheat, barley, rice, rye, and/or corn, Particularly suited are ungelatinised starches from various origin, including from roots known to contain starchy matter.

When the formulations according to the invention are a roux or base sauce, they can yield a sauce upon dilution/heating with an aqueous liquid.

Following the invention, it is now possible to manufacture a (savoury) food composition comprising 15-80% wt (preferably 25-70% wt) of di- and/or triglycerides of fatty acids, 20-85% wt (preferably 30-75% wt) of a starch-containing matter and which composition contains less than 30% wt of water (preferably less than 20% wt), wherein the triglycerides are selected such that they contain less than 5%, preferably less than 2% wt of trans-unsaturated fatty acids, and preferably having less than 10% wt (more preferably less than 3%, most preferably less than 0.5%) of lauric acid, and wherein the fats still have appropriate melting and crystallisation behaviour.

Hence, it is now possible to manufacture e.g. roux-type products which contain a large proportion of vegetable fats, which composition is substantially free from trans-fatty acids or triglycerides thereof. Thus, the invention further relates to a savoury food composition comprising 15-80% wt (preferably 25-70% wt) of triglycerides of fatty acids, 20-85% wt (preferably 30-75%) of a starch-containing matter and which composition contains less than 30% wt (preferably less than 20% wt) of water, wherein at least 50% of the fats is of vegetable origin, and which composition is substantially free from trans-unsaturated fatty acids or triglycerides thereof. Preferably, the compositions according to the invention are substantially free from animal fat.

### Detailed description of the invention

In the composition according to the invention it is preferred that the amount of H3 (triglyceride of 3 saturated fatty acids of 16 or more carbon atoms) is at least 15% wt based on the total amount of triglycerides, preferably at least 20%, more preferably at least 25% wt.. Likewise, it is preferred that the amount of H2U (triglyceride of 2 saturated fatty acids of 16 or more carbon atoms and 1 cis-unsaturated fatty acid) taken together is at least 30% wt (preferably at least 40% wt) based on the total amount of triglycerides.

Apart from the amounts of H3 and H2U it can be preferred to use fats of such composition in a particular ratio. In this case, the ratio H3 : H2U is preferably between 0.5 and 1.2.

Regarding the basic fatty acid composition, it is preferred that the amount of H (i.e. saturated fatty acids of 16 or more carbon atoms) is between 60 and 75% wt based on total amount of fatty acids. Normally, only fatty acids are used with even number of carbon atoms. Similarly, it is preferred that the amount of U (cis-unsaturated fatty acids of any suitable chain length) is between 20 and 45% wt based on total amount of fatty acids.

In the composition according to the invention the amount of palmitic fatty acid (C16:0) in the triglycerides is preferably between 40 and 60% wt based on the total amount of fatty acids.

The invention thus also relates to (savoury) food compositions comprising the fatblends as set out above. Such (savoury) food compositions according to the invention can be any physical format, but the invention is most suitable for savoury compositions that are in the form of pasty or particulate matter. Particulate matter is herein to be understood to comprise e.g. flakes, powder, cubes, pellets, tablets. Preferably, the composition according to the invention is a roux.

Examples of the (savoury) products according to the invention are roux, sauce-base products, and the like. A suitable process for manufacturing such products involves heating fat and a flour to a temperature of above about 60°C (preferably above about 90°C) for 0.1-300 (typically 5-30) minutes, followed by cooling for 1-360 (typically 1-60) minutes and optionally comminution. The food compositions can (e.g. in the case when it is a roux) be prepared according to a process similar as is disclosed in EP 112504.

The (savoury) food compositions according to the invention may further comprise (e.g. in an amount of 0.1-50% wt) one or more of the following ingredients: herbs and/or spices, tomato powder, vegetable pieces, monosodium glutamate and other components.

### EXAMPLE

The table below gives an example with a fat (POs; nr 1) which is a dry-fractionated palm stearin with a melting point of approx. 53°C. The fat PO44 ("comp") is a fat blend obtained by hardening palm oil to a melting point of approx. 44°C, and represents the prior art.
The fatblend "Mix A" was prepared by interesterification of a 60% palm oil, 40% rape 68 blend.

| | COMP | 1 | 2 |
|---|---|---|---|
| Mix A | | | 100 |
| POs | | 100 | |
| PO44 | 100 | | |
| H3 | 12 | 34 | 41 |
| H2E | 29 | 0 | 0 |
| H2M | 1 | 1 | 1 |
| H2U | 21 | 42 | 43 |
| HE2 | 10 | 0 | 0 |
| H3/H2U | 0.55 | 0.81 | 0.95 |
| H | 53 | 68 | 70 |
| E | 24 | 0 | 0 |
| U | 23 | 32 | 27 |
| Palmitic | 45 | 60 | 30 |
| Stearic | 7 | 6 | 40 |
| H2U:sym/ | 6 | 6 | 0.5 |
| Assym | | | |
| H3+H2U | 33 | 76 | 84 |
| Note: the numbers of all the fats given does not add up to 100%, as some minor amounts of other fats are also present. | | | |

The fat blends 1 (POs) and 2 (Mix A) have been developed in order to provide a fat blend having suitable properties on melting, crystallisation, mouthfeel, fat staining, etcetera, but without substantial amounts of trans-unsaturated fatty acids, while keeping the amount of lauric acid in the triglycerides low (1% maximum).

### Roux

A roux was prepared according to example 1 of EP 112504. The fat blend used was fat blend 1 (POs). The result was a product which was good to prepare and having properties similar to the properties of the product as prepared in example 1 of EP 112504, and having less than 1 % wt of trans fatty acid triglycerides.

A similarly suitable result was obtained using fatblend 2 (mix A)

### Comparative roux

The same roux was made as in the above example, with the exception that fat COMP from table 1 has been used. The result was a product which was good to prepare and having properties similar to the properties of the product as prepared in example 1 of EP 112504.

## Claims

1. Savoury food composition comprising 15-80% wt (preferably 25-70% wt) of triglycerides of fatty acids, 20-85% wt (preferably 30-75%) of a starch-containing matter and which composition contains less than 30% wt (preferably less than 20% wt) of water, wherein the amount of H3 (triglyceride of 3 saturated fatty acids of 16 or more carbon atoms) and H2U (triglyceride of 2 saturated fatty acids of 16 or more carbon atoms and 1 cis-unsaturated fatty acid) taken together is at least 55% wt based on the total amount of triglycerides.

2. Composition according to claim 1 wherein said amount of H3 + H2U is at least 65% wt based on the total amount of triglycerides.

3. Composition according to claim 1-2, wherein the amount of H3 (triglyceride of 3 saturated fatty acids of 16 or more carbon atoms) is at least 15% wt based on the total amount of triglycerides, preferably at least 20%.

4. Composition according to claim 1-3, wherein the amount of H2U (triglyceride of 2 saturated fatty acids of 16 or more carbon atoms and 1 cis-unsaturated fatty acid) taken together is at least 30% wt (preferably at least 40% wt) based on the total amount of triglycerides.

5. Composition according to claim 1-4, wherein the ratio H3 : H2U is between 1: 0.5 and 1:1.2.

6. Composition according to claim 1-5, wherein the amount of H is between 60 and 75% wt based on total amount of fatty acids.

7. Composition according to claim 1-6, wherein the amount of U is between 20 and 45% wt based on total amount of fatty acids.

8. Composition according to claim 1-7, wherein the amount of palmitic fatty acid (C16:0) based on the total amount of fatty acids is between 30 and 70% wt.

9. Composition according to the invention wherein the starch-containing matter comprises flour, natural starch, native starch, chemically and/or physically modified starch.

10. Composition according to claim 9, wherein the flour or starch is obtained from wheat, barley, rice, rye, corn and/or roots.

11. Composition according to claim 1-10, wherein the composition is a pasty or particulate matter.

12. Composition according to claim 11, wherein the particulate matter comprises flakes, granules, powder, cubes, pellets, tablets.

13. Composition according to claim 1-12, wherein the composition is a roux.

14. Composition according to claim 1-13, wherein the composition further comprises 0.1-50% wt of salt and/or herbs and/or spices and/or tomato powder and/or vegetable pieces and/or monosodium glutamate.

15. Composition comprising 15-80% wt (preferably 25-70% wt) of triglycerides of fatty acids, 20-85% wt (preferably 30-75%) of a starch-containing matter and which composition contains less than 30% wt (preferably less than 20% wt) of water, wherein at least 50% of the fats is of vegetable origin, and which composition is substantially free from trans-unsaturated fatty acids or triglycerides thereof.

16. Process for manufacturing any of the compositions according to claim 1-15, which process comprises the steps of heating fat and the starch-containing matter to a temperature of at least 60°C (preferably at least 90°C) for 0.1-300 (preferably 5-30) minutes, followed by cooling for 1-360 (preferably 1-60) minutes and optionally comminution.
